# EUROPEAN PATENT APPLICATION

(11) **EP 1 694 090 A1**
(43) Date of publication of application: **23.08.2006**
(21) Application number: 06003532.6
(22) Date of filing: 21.02.2006
(51) Int. Cl.: H04Q 7/38

(54) **Mobile station for performing handoff using position information and method therof**

(30) Priority: 22.02.2005 KR 2005014725
(71) Applicant: Samsung Electronics Co., Ltd., Suwon-si, Gyeonggi-Do (KR)
(72) Inventor: Kwon, Do-Hun, Yeongtong-Gu, Suwon-Si, Gyeonggi-Do (KR); Lee, Ki-Tae, Yeongtong-Gu, Suwon-Si, Gyeonggi-Do (KR); Cho, Byung-Duck, Yeongtong-Gu, Suwon-Si, Gyeonggi-Do (KR); Kam, Doo-Yoel, Yeongtong-Gu, Suwon-Si, Gyeonggi-Do (KR); Oh, Dong-In, Yeongtong-Gu, Suwon-Si, Gyeonggi-Do (KR)
(74) Representative: Grünecker, Kinkeldey, Stockmair & Schwanhäusser Anwaltssozietät

(57) **Abstract**

A mobile station (MS) for performing a handoff using position information including a global positioning system (GPS) module for receiving one or more GPS signals; and a controller for calculating a position of the MS by enabling the GPS module if a handoff condition occurs and transmitting the calculated position information to a base station (BS).

## Description

The present invention relates generally to a handoff in a mobile communication system, and in particular, to a mobile station for performing the handoff using position information and a method thereof.

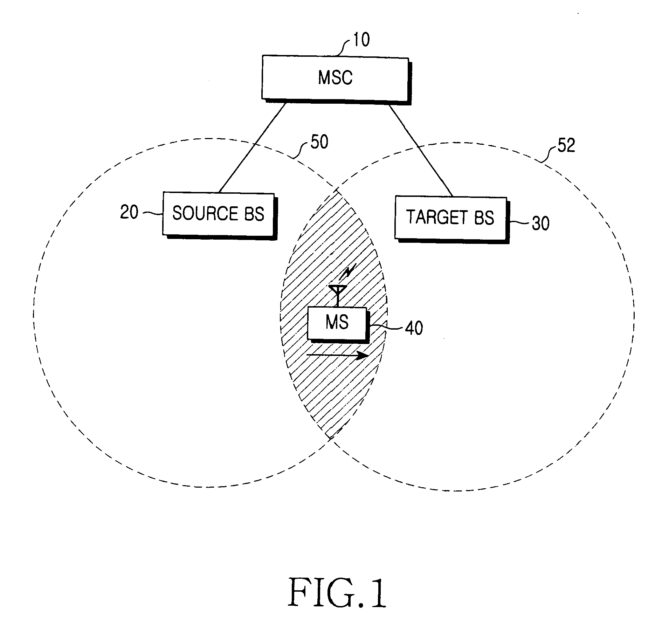

In general, a mobile communication system includes one or more base stations and a plurality of mobile stations communicating with the base stations. FIG. 1 is a schematic configuration of a typical mobile communication system. Signals transmitted from a mobile station (MS) 40 are received by base stations (BSs) 20 and 30 and may be relayed to a mobile switching center (MSC) 10. The MSC 10 routes the relayed signals to the Public Switched Telephone Network (PSTN) or another mobile station. Each of the BSs 20 and 30 covers a cell, a range in which the MSs can communicate. A cell covers a limited geographic area. A BS of the cell routes calls to a communication network through the MSC 30. A coverage area of the typical mobile communication system is divided into a plurality of cells. When the MS 40 moves from a first cell 50 to a second cell 52, and enters a boundary area between the first cell 50 and the second cell 52, a handoff is performed to allocate new system resources related to the second cell 52 to the MS 40.

In such a mobile communication system, a conventional handoff method uses the strength of signals transmitted from the BSs 20 and 30, and received by the MS 40. The source BS 20 determines whether the handoff is performed, based on information transmitted from the MS 40. When signal strength, i.e., an energy-to-interference ratio (Ec/lo), of a signal received from the target BS 30 drops below a predetermined threshold, the MS 40 requests the source BS 20 to perform the handoff. When Ec/lo of a signal received from the source BS 20 drops below a specified threshold, the MS 40 also requests the source BS 20 for the handoff.

As described above, the conventional handoff method is a method of determining whether the handoff is performed based on only strength of the BS signals received by an MS. Due to this limited information, a BS cannot know whether an MS is located at a position where the handoff is actually needed. Furthermore, signed strength measurements alone may not result in the handoff being performed at the time when an MS needs the handoff.

In the conventional handoff method, handoff request messages may be generated in areas where handoffs are not necessary simply because the strength of a specific BS signal is stronger or weaker by an instantaneous change of a channel state. In addition, despite an MS being located at a handoff area and being in a position where the MS should receive data from a plurality of BSs, the MS may frequently add or drop a pilot signal of a BS according to a change of signal strength.

These factors frequently cause unnecessary processing between an MS and a BS and also cause increased interference between MSs.

To solve these problems, technology has been suggested by which a handoff is performed according to a position of an MS. Herein, when the MS calculates its own position using the global positioning system (GPS) and transmits the calculated position to a BS, the BS monitors whether the MS is located at a handoff position and performs the handoff according to the monitored result.

The MS must continuously enable a GPS module equipped therein in order to report its own position to the BS. Thus, the MS will continuously search GPS satellites providing position information and calculate its own position. To calculate its own position by continuously enabling the GPS module causes a heavy load on the MS, resulting in significant power consumption.

Accordingly, it is the object of the present invention to provide an improved method of performing a handoff in a mobile communication system and the mobile station therefor.

This object is solved by the subject matter of the independent claims.

Preferred embodiments are defined in the dependent claims.

According to an aspect of the present invention, there is provided a method for performing a handoff (only in locations of a mobile station where the handoff is necessary) in a mobile communication system and the mobile station therefor.

According to another aspect of the present invention there is provided an apparatus and method for enabling a global positioning system (GPS) module of a mobile station (MS) to determine whether a handoff is necessary.

According to one aspect of the present invention, there is provided a MS for performing a handoff using position information, the MS including a GPS module for receiving one or more GPS signals; and a controller for calculating its own position by enabling the GPS module if a handoff condition occurs and transmitting the calculated position information to a base station (BS).

The present invention will become more apparent from the following detailed description when taken in conjunction with the accompanying drawings in which:
FIG. 1 is a schematic configuration of a typical mobile communication system; FIG. 2 is an illustration explaining operations of a BS and an MS in a mobile communication system according to a preferred embodiment of the present invention;
FIG. 3 is a block diagram of the MS according to a preferred embodiment of the present invention;
FIG. 4 is a flowchart illustrating a message flow between the MS and the BS when a handoff is performed according to a preferred embodiment of the present invention; and
FIG. 5 is a flowchart illustrating a message flow between the MS and the BS when the handoff is performed according to another preferred embodiment of the present invention.

Preferred embodiments of the present invention will be described herein with reference to the accompanying drawings. In the drawings, the same or similar elements are denoted by the same reference numerals even though they are depicted in different drawings. In the following description, well-known functions or constructions are not described in detail since they would obscure the invention in unnecessary detail.

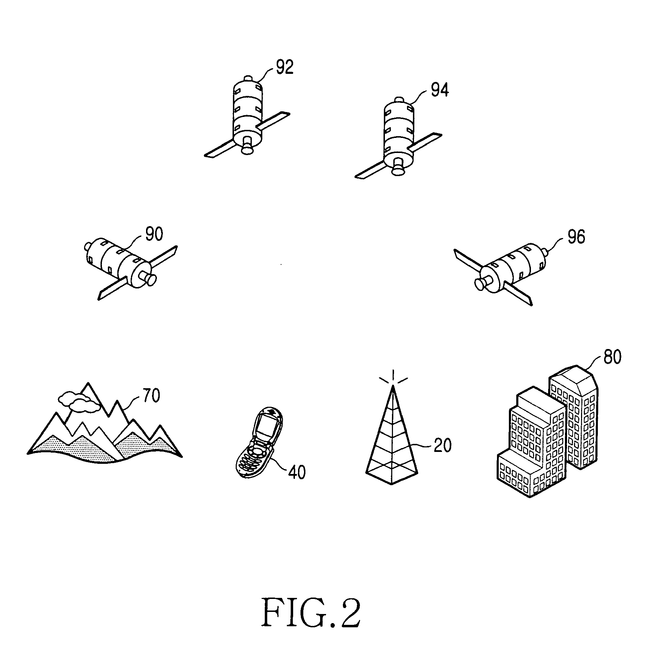

According to an embodiment of the present invention, a mobile station (MS) calculates its own position by enabling a global positioning system (GPS) module if a handoff condition occurs and transmits the calculated position information to a base station (BS). According to another embodiment of the present invention, the MS determines an enable period of the GPS module; calculates its own position by enabling the GPS module according to the GPS module enable period; and transmits the calculated position information to the BS. The present invention will now be described with reference FIG. 2.

FIG. 2 is an illustration for explaining operations of a BS and an MS in a mobile communication system according to a preferred embodiment of the present invention. The mobile communication system is surrounded by buildings 80 and various natural obstacles 70 on the earth. A BS 20 and an MS 40 are deployed in a GPS environment having a plurality of GPS satellites 90, 92, 94, and 96. Such a GPS environment is well known. It will be understood by those skilled in the art that the present invention can be applied to other communication systems, such as Global Systems for Mobile Communications (GSM), without departing from the spirit and scope of the invention.

In a typical GPS application, at least four GPS satellites are required for a GPS receiver to determine its position. In the present invention, a position of the MS 40 can be determined using three GPS satellites and a round trip delay time of a signal from the MS 40 to the serving BS 20. In addition, a position of the MS 40 can be determined using two GPS satellites, the round trip delay time, and a known position of the serving BS 20. Then, the MS 40 transmits its own position to the BS 20.

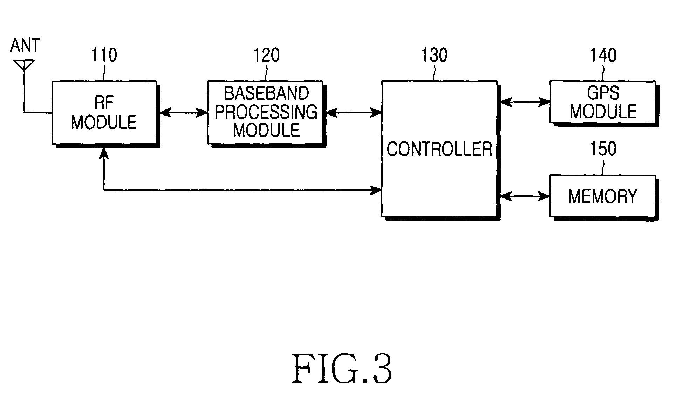

According to a preferred embodiment of the present invention, the MS 40 enables a GPS module (refer to FIG. 3) for determining its own position when a handoff condition occurs. Thus, the MS 40 monitors whether the handoff condition occurs in order to determine its own position. The handoff condition will now be described. The MS 40 monitors whether strength, i.e., Ec/lo, of a pilot signal received from the BS 20 drops below a predetermined threshold. This is a general handoff condition. The MS 40 also can determine whether the handoff condition occurs by using current Received Signal Strength Indication (RSSI) or a signal-to-noise ratio (SNR). For example, the MS 40 can determine whether the handoff condition occurs by setting a reference value for the RSSI or SNR and comparing a current value of the RSSI or SNR with the reference value. It will be understood by those skilled in the art that the present invention is not limited to these examples of handoff conditions, but that other handoff conditions may be used.

According to another preferred embodiment of the present invention, the MS 40 enables the GPS module periodically. For example, when a specified area includes a plurality of places in which the MS 40 has difficulty locating, GPS satellites, the MS 40 can periodically calculate its correct position. An environment in which the MS 40 must search GPS satellites frequently occurs in an area including a downtown or an indoor environment. The MS 40 can determine whether to enable the GPS module periodically according to information regarding an area in which the MS is located at the moment. In this case, the MS 40 determines an enable period for the GPS module. The MS 40 can determine whether the GPS module is enabled by determining whether a predetermined period for calculating its own position arrives.

When the handoff condition occurs, the MS 40 determines its own position by enabling the GPS module and transmits the position to the BS 20. The BS 20 determines whether the handoff is necessary using the position of the MS 40. If the BS 20 determines that the MS 40 is in a position for which a handoff is required, the BS 20 starts to perform a handoff process. If the BS 20 determines that the MS 40 is not in a position for which a handoff is required, the BS 20 maintains a current communication state without performing the handoff process. A configuration and operation of the MS 40 according to a preferred embodiment of the present invention will now be described.

FIG. 3 is a block diagram of the MS 40 according to a preferred embodiment of the present invention. Referring to FIG. 3, the MS 40 includes a radio frequency (RF) module 110, a baseband processing module 120, a controller 130, a GPS module 140, and a memory 150.

The GPS module 140 receives GPS signals from one or more GPS satellites 90, 92, 94, and 96 and provides the received GPS signals to the controller 130. The controller 130 enables the GPS module 140 if a handoff condition occurs according to a preferred embodiment of the present invention. The controller 130 enables the GPS module 140 according to a GPS module enable period according to another preferred embodiment of the present invention. After enabling the GPS module 140, the controller 130 receives GPS signals from one or more GPS satellites through the GPS module 140. When receiving the GPS signals through the GPS module 140, the controller 130 calculates its own position using the GPS signals and transmits its position information to the BS 20. The controller 130 controls each component of the MS 40 to perform a handoff process by linking to the controller 130.

The RF module 110 transmits and receives an RF signal to and from the BS 20 through an antenna. The RF module 110 converts the received RF signal to an intermediate frequency (IF) signal and outputs the converted IF signal to the baseband processing module 120. The RF module 110 also converts an IF signal received from the baseband processing module 120 to an RF signal and transmits the converted RF signal to the BS 20. The baseband processing module 120 is a baseband analog ASIC (BAA) for providing an interface between the controller 130 and the RF module 110. The baseband processing module converts a baseband digital signal received from the controller 130 to an analog IF signal and transmits the converted analog IF signal to the RF module 110, and also converts the analog IF signal received from the RF module 110 to a baseband digital signal and transmits the converted baseband digital signal to the controller 130. The memory 150 stores a plurality of programs and data required to control an operation of the MS 40.

Message flows, which occur between the MS 40 and the BS 20 when a handoff is performed according to preferred embodiments of the present invention, will now be described.

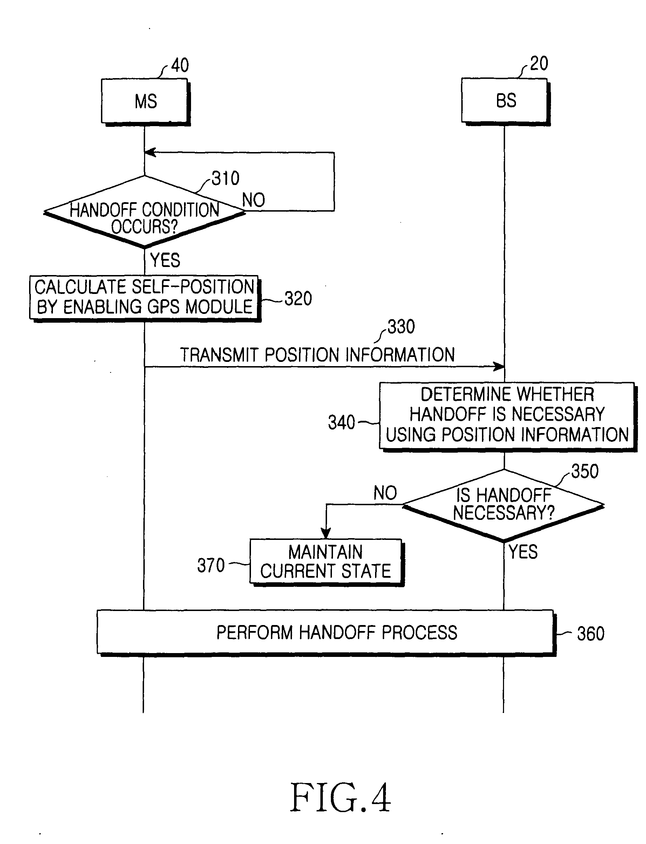

FIG. 4 is a flowchart illustrating a message flow between the MS 40 and the BS 20 when a handoff is performed according to a preferred embodiment of the present invention.

Referring to FIG. 4, in step 310, the MS 40 determines whether a handoff condition occurs. That is, the MS 40 monitors whether the handoff condition occurs. As described above, the handoff condition is that strength (i.e., Ec/lo, of a pilot signal received from the serving BS 20) drops below a predetermined threshold. The handoff condition may also be, for instance, that a current value of RSSI or SNR is not within a predetermined range of a reference value.

If the handoff condition occurs, in step 320, the MS 40 calculates its own position by enabling the GPS module 140. In step 330, the MS 40 transmits the calculated position information to the BS 20.

In step 340, the BS 20 determines whether the handoff is necessary using the position information of the MS 40. That is, the BS 20 determines whether the MS 40 is located at a position where the handoff is necessary at the moment. According to a result of the determination, if the handoff of the MS 40 is necessary in step 350, in step 360, the BS 20 performs a handoff process by linking to the MS 40. If the handoff of the MS 40 is determined to be unnecessary in step 350, then in step 370, the BS 20 maintains the current communication state.

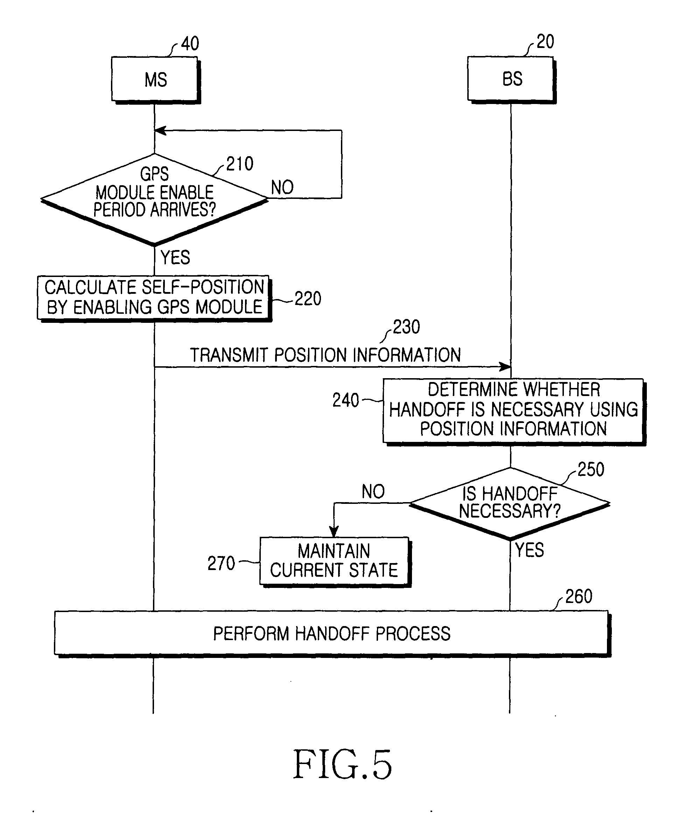

FIG. 5 is a flowchart illustrating a message flow between the MS 40 and the BS 20 when a handoff is performed according to another preferred embodiment of the present invention. Steps 220 to 270 in another preferred embodiment of the present invention illustrated in FIG. 5 are similar to steps 320 to 370 in the preferred embodiment of the present invention illustrated in FIG. 4.

Referring to FIG. 5, in step 210, the MS 40 determines whether an enable period of the GPS module 140 has occurred. As described above, the MS 40 can determine to enable the GPS module 140 periodically according to information regarding an area in which the MS 40 is located at the moment. For example, when a specified area includes a plurality of places in which the MS 40 has difficulty locating GPS satellites, the MS 40 can periodically calculate its correct position.

The MS 40 can determine whether the GPS module 140 is enabled by determining whether a predetermined period for calculating its own position (i.e., the enable period of the GPS module 140) arrives. If the GPS module enable period arrives, in step 220, the MS 40 calculates its own position by enabling the GPS module 140. In step 230, the MS 40 transmits the calculated position information to the BS 20.

In step 240, the BS 20 determines whether the handoff is necessary using the position information of the MS 40. According to a result of the determination, if the handoff of the MS 40 is necessary in step 250, then in step 260, the BS 20 performs a handoff process by linking to the MS 40. If the handoff of the MS 40 is unnecessary in step 250, in step 270, then the BS 20 maintains a current communication state.

As described above, according to embodiments of the present invention, an MS enables a GPS module only on the occasions, such as when a handoff condition occurs or when a GPS module enable period arrives, thereby removing necessity for always enabling the GPS module of the MS.

In addition, by removing the necessity for always enabling the GPS module of the MS to perform a handoff using position information, unnecessary power consumption and a heavy load on the MS can be reduced.

While the invention has been shown and described with reference to a certain preferred embodiment thereof, it will be understood by those skilled in the art that various changes in form and details may be made therein without departing from the scope of the invention as defined by the appended claims.

## Claims

1. A mobile station for performing a handoff using position information, the mobile station comprising:
a GPS module for receiving one or more GPS signals; and
a controller for calculating a position for the mobile station by enabling the GPS module if a handoff condition occurs and transmitting the calculated position information to a base station.

2. The mobile station of claim 1, wherein the controller determines whether the handoff condition occurs by detecting whether strength, i.e., an energy-to-interference ratio, Ec/lo, of a pilot signal received from the base station drops below a predetermined threshold.

3. The mobile station of claim 1 or 2, wherein the controller determines whether the handoff condition occurs by comparing a reference value with one of a Received Signal Strength Indication, RSSI, and a signal-to-noise ratio, SNR.

4. A mobile station for performing a handoff using position information, the mobile station comprising:
a GPS module for receiving one or more GPS signals; and
a controller for determining an enable period of the GPS module, calculating a position for the mobile station by enabling the GPS module according to the GPS module enable period, and transmitting the calculated position information to a base station.

5. The mobile station of claim 4, wherein the controller determines to periodically enable the GPS module when the mobile station is located at an area including a plurality of places in which the mobile station has difficulty locating GPS satellites providing the GPS signals.

6. A method of performing handoff using position information in a mobile station including a GPS module for receiving one or more GPS signals, the method comprising:
determining whether a handoff condition occurs;
calculating a position for the mobile station by enabling the GPS module if the handoff condition occurs; and
transmitting the calculated position information to a base station.

7. The method of claim 6, wherein determining whether the handoff condition occurs is performed by detecting whether a signal strength measured by an energy-to-interference ratio, Ec/lo, of a pilot signal received from the base station drops below a predetermined threshold.

8. The method of claim 6 or 7, wherein determining whether the handoff condition occurs is determined by comparing a reference value with one of a Received Signal Strength Indication, RSSI, and a signal-to-noise ratio, SNR.

9. A method of performing a handoff using position information in a mobile station including a GPS module for receiving one or more GPS signals, the method comprising:
determining an enable period of the GPS module;
calculating a position for the mobile station by enabling the GPS module when the GPS module enable period arrives; and
transmitting the calculated position information to a base station.

10. The method of claim 9, further comprising:
determining to periodically enable the GPS module when the mobile station is located at an area including a plurality of places in which the mobile station has difficulty locating GPS satellites providing the GPS signals.
